# EUROPÄISCHE PATENTSCHRIFT

(11) **EP 3 225 111 B1**
(45) Veröffentlichungstag und Bekanntmachung des Hinweises auf die Patenterteilung: **03.03.2021**
(21) Anmeldenummer: 17401022.3
(22) Anmeldetag: 06.03.2017
(51) Int. Cl.: A01M 7/00, A01C 23/04

(54) **EINSPÜLBEHÄLTER MIT EINSPÜLDÜSEN**
RINSING CONTAINER WITH RINSING NOZZLES
RÉCIPIENT DE RINÇAGE AVEC BUSES DE RINÇAGE

(30) Priorität: 10.03.2016 DE 102016104364
(43) Veröffentlichungstag der Anmeldung: 04.10.2017
(73) Patentinhaber: Amazonen-Werke H. Dreyer GmbH & Co. KG, 49205 Hasbergen (DE)
(72) Erfinder: Schiermann, Stefan, 48432 Rheine (DE); Holtkötter, Christian, 33775 Versmold (DE)

(56) Entgegenhaltungen:
- EP-A1- 2 946 664
- WO-A1-2008/003315
- DE-A1-102013 107 445
- US-A- 5 335 690
- US-A1- 2004 069 871

## Beschreibung

Die Erfindung betrifft einen Einspülbehälter einer landwirtschaftlichen Feldspritze gemäß des Oberbegriffes des Patentanspruches 1.

Ein derartiger Einspülbehälter und die Anordnung von Einspüldüsen in einem Einspülbehälter ist in DE 10 2013 107 445 A1 beschrieben. Bei diesem bekannten Stand der Technik sind mehrere Einspüldüsen beabstandet zueinander in einer ringförmig ringförmig ausgestalteten und im oberen Bereich unterhalb der Einfüllöffnung des Einspülbehälters angeordneten Spülleitung angeordnet. Dieser bekannte Einspülbehälter mit in dessen oberen Bereich angeordneten Einspüldüsen ist dem Flüssigkeitszuführungssystem einer landwirtschaftlichen Feldspritze zum dosierten Ausbringen von mit Frischwasser zu einer Spritzbrühe verdünnten Pflanzenbehandlungsmitteln und/oder Düngemitteln mit einem Spritzmitteltank zugeordnet. Die Spülleitung ist mit einer Zuführleitung mit einer Frischwasserzuführeinrichtung zur Zuführung von Frischwasser verbunden. Die beabstandet zueinander angeordneten ein Spüldüsen weisen jeweils zumindest eine zumindest teilweise nach unten weisende Austrittsöffnung auf. Die Einspüldüsen sind innerhalb des Einspülbehälters an der Spülleitung angeordnet, so dass die jeweilige Zuleitung der jeweiligen Einspüldüse mit der Spülleitung verbunden ist. Die Ausgestaltung der jeweiligen Austrittsöffnung der jeweiligen Einspüldüse ist hier nicht beschrieben. Aus der Zeichnung ist lediglich erkennbar, dass der aus den jeweiligen Austrittsöffnungen der Einspüldüsen austretende Frischwasserstrahl im Winkel von 45° schräg zur Seite und nach unten zum Mittelbereich des Einsprülbehälters gerichtet ist. Durch diese Anordnung soll eine rotierende und/oder strudelartige Bewegung der sich im Einspülbehälter befindlichen Flüssigkeit erzeugt werden.

Der Erfindung liegt die Aufgabe zu Grunde, kompakte bauende Einspüldüsen und deren kompakte Anordnung an einer im oberen Bereich und unterhalb der Einspülöffnung eines Einspülbehälters angeordnet und ringförmig ausgestalteten Spülleitung zu schaffen.

Diese Aufgabe wird erfindungsgemäß durch die kennzeichnenden Merkmale des Anspruches 1 gelöst.

Infolge dieser Maßnahmen ergeben sich vorteilhaft kompakt ausgestaltete Einspüldüsen sowie deren kompakte und gedrungene Anordnung innerhalb des Einspülbehälters direkt unterhalb der von einem Kragen umgebenen Einfüllöffnung des Einspülbehälters. Durch die schlitzförmige Ausgestaltung der Austrittsöffnungen und deren erfindungsgemäße Ausrichtung wird das Frischwasser durch die schlitzförmigen Austrittsöffnungen in gerichteter Weise optimiert zum Einspülen der einzuspülenden Wirkstoffmittel in das zugeführte Frischwasser in den Einspülbehälter eingebracht. Aufgrund der entsprechenden Ausgestaltung und Anordnung der Einspüldüsen an der ringförmig ausgestalteten Spülleitung lässt sich die vorteilhafte kompakte Ausgestaltung und Anordnung von Einspüldüsen und Spülleitung erreichen.

In einfacher Weise lässt sich die kompakte Ausgestaltung der Einspüldüsen dadurch in einfacher Weise erreichen, dass die Abzweigung Bestandteil eines in die ringförmige Spülleitung integrierten Leitungsabschnittes der Spülleitung mit Anschlusselementen an Teilbereichen der ringförmigen Spülleitung ist. Hierdurch ergibt sich ein direkter Anschluss der Einspüldüsen unmittelbar und direkt auf kürzestem Wege an die Spülleitung.

Eine einfache Herstellung der Einspüldüse mit der Abzweigleitung lässt sich fertigungstechnisch dadurch verwirklichen, dass die Abzweigleitung sich über die Mündungsöffnung in Richtung der Unterseite des Gehäuses der Einspüldüse fortsetzt und in Endbereich durch einen Verschlußstopfen verschlossen ist.

Eine vorteilhafte Einbringung des Frischwassers mit einer vorteilhaften Einspülung der Wirkstoffmittel in das Frischwasser lässt sich dadurch erreichen, dass die schlitzförmige Austrittsöffnung für die Einbringung des Frischwassers in den Einspülbehälter schräg nach unten und schräg zumindest annähernd parallel zu einer an den Behälter angelegten Geraden oder Tangenten in den Einspülbehälter hinein schräg nach unten gerichtet ist.

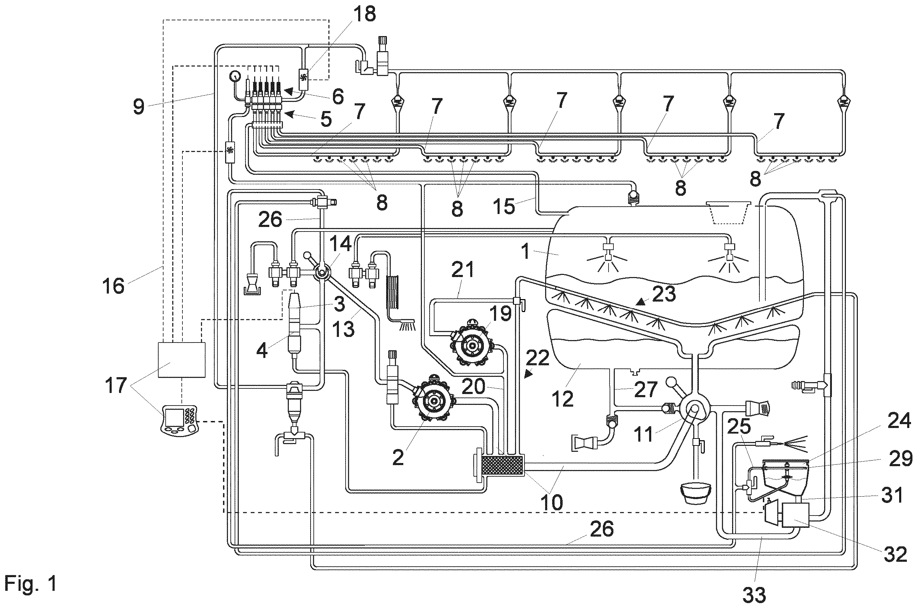

Weitere Einzelheiten der Erfindung sind der Beispielsbeschreibung zu entnehmen. Die Zeichnungen zeigen
- Fig. 1: den Flüssigkeitsplan einer Feldspritze in Prinzipdarstellung,

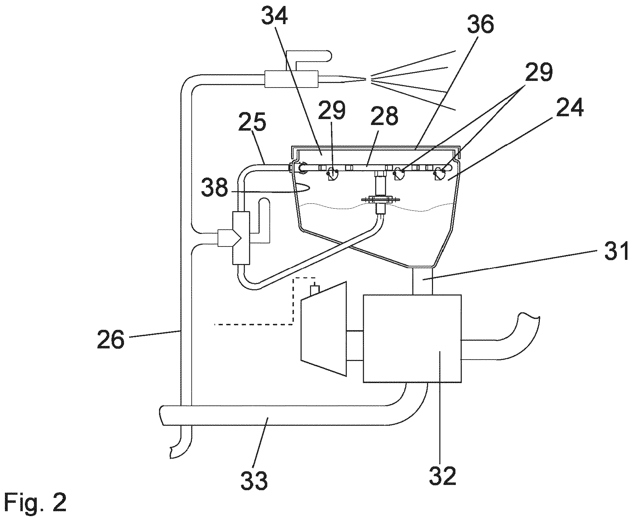

- Fig. 2: einen Teilbereich des Flüssigkeitsplanes, betreffend den Bereich des Einspülbehäters gemäß Fig. 1 in vergrößerter Darstellung,

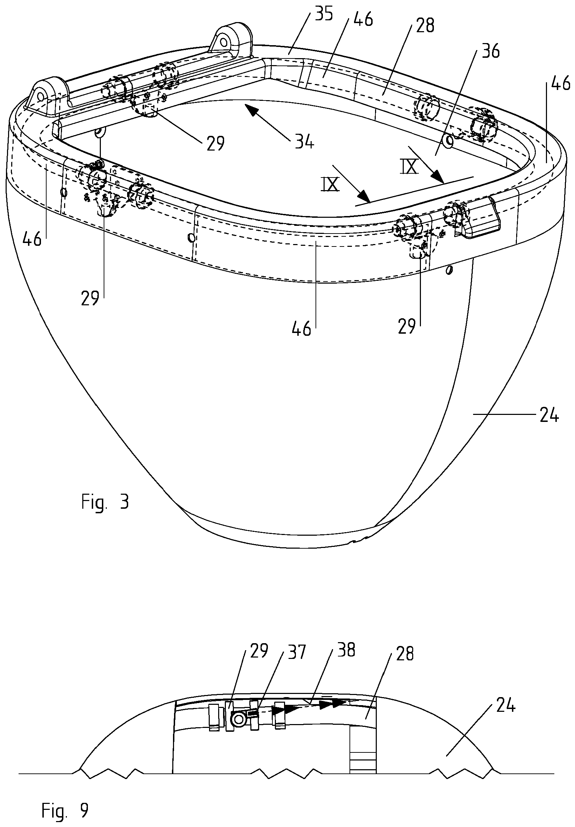

- Fig. 3: den Einspülbehälter mit der ringförmigen Spülleitung und den daran angeordneten Einspüldüsen ohne Deckel in perspektivischer Darstellung von schräg-oben,

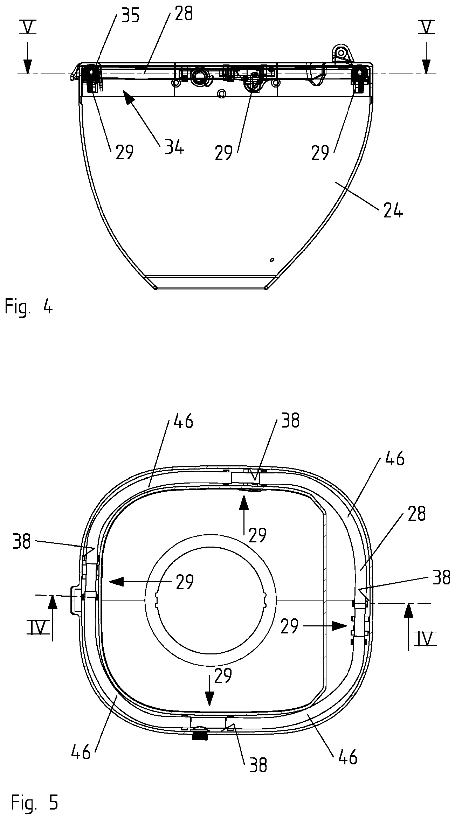

- Fig.4: den Einspülbehälter gemäß Fig.3 im Schnitt IV - IV,
- Fig.5: den Einspülbehälter gemäß Fig.3 im Schnitt V - V,

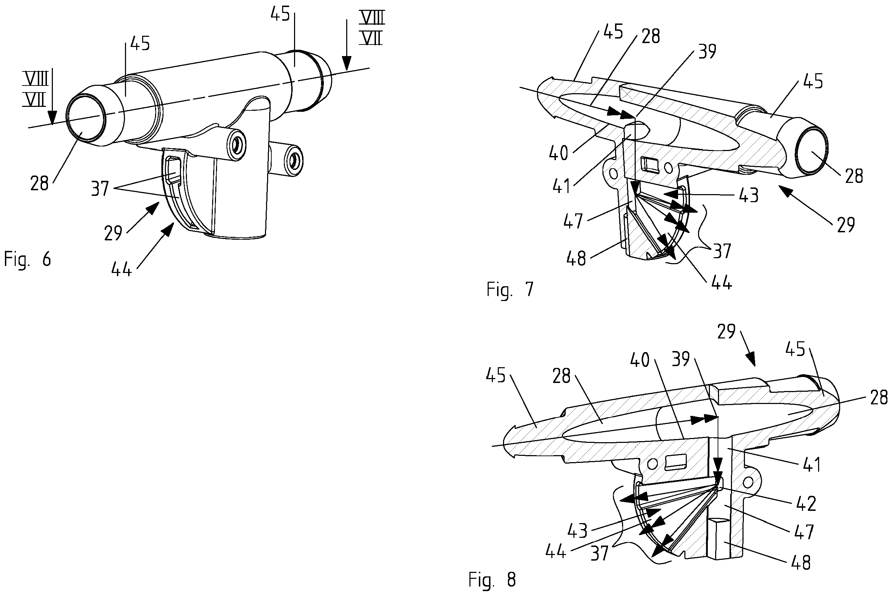

- Fig.6: eine Einspüldüse nach Fig.3 in perspektivischer Darstellung,
- Fig.7: die Einspüldüse nach Fig. 6 im Schnitt VII - VII,
- Fig.8: die Einspüldüse nach Fig. 7 im Schnitt VII - VII und
- Fig.9: die Anordnung der Einspüldüse gemäß Fig.3 bezüglich der Innenwand des Einspülbehälters in der Ansicht IX - IX.

Die Feldspritze weist unter anderem einen Spritzmitteltank 1 zur Aufnahme der auszubringenden Pflanzenschutzmittelbrühe, eine motorisch angetriebene Pumpe 2, ein über einen Stellmotor 3 einstellbares Regelventil 4 aufweisende Dosierarmatur, die Teilbreitenschaltventile 5 mit den motorischen Einstellgliedern 6, die zu den einzelnen Teilbreitenleitungen 7 des mit Spritzdüsen 8 bestückten Verteilergestänges führende Spritzleitung 9 auf. Diese Feldspritze ist dosierten Ausbringen von mit Frischwasser zu einer Spritzbrühe verdünnten Pflanzenbehandlungsmitteln und/oder Düngemitteln geeignet.

Auf der Saugseite der Pumpe 2 ist die Saugleitung 10 angeschlossen, die unter Zwischenschaltung eines zentralen Umschaltventils 11 am unteren Bereich des Flüssigkeitstank 1 angeschlossen ist. An dem Umschaltventil 11 können noch weitere Leitungen zum externen Anschluss von Wassertanks, Vorrichtungen zum Ansaugen von Wasser aus Gewässern, zum Anschluss des Klarwasserbehälters 12 sowie eine Ablaufleitung angeschlossen sein. Auf der Druckseite der Pumpe 2 ist eine Druckleitung 13 angeordnet, die unter Zwischenschaltung eines weiteren Umschaltventils 14 zu dem Regelventil 4 der Dosierarmatur und weiteren Einrichtungen der Feldspritze führt. Die verschiedenen Rücklaufleitungen sind zu einer Sammelrücklaufleitung 15 zusammengefasst. Die Rücklaufleitung 15 mündet in den Flüssigkeitstank 1.

In der von den dem Regelventil 4 zu den Teilbreitenleitungen 7 führenden Spritzleitung 9 ist der über die Signalleitung 16 mit der als Bordcomputer 17 ausgebildeten elektronischen Steuer- und/oder Regeleinrichtung verbundene Durchflussmesser 18 angeordnet.

Unterhalb des Flüssigkeitstanks 1 ist der Klarwasserbehälter 12 zur Aufnahme von Klarwasser angeordnet. An diesem Klarwasserbehälter 12 ist eine zweite Pumpe 19 angeschlossen. Saugseitig ist diese zweite Pumpe über die Leitung 20 mit dem Umschaltventil 11 verbunden. Hierüber kann die Saugleitung 20 wahlweise mit verschiedenen Flüssigkeitsreservoirs, beispielsweise mit dem Flüssigkeitstank 1, dem Klarwasserbehälter 12 oder einem externen Flüssigkeitsvorrat verbunden werden. Druckseitig ist an der zweiten Pumpe 19 die Druckleitung 21 angeschlossen, welche mit dem Spül- 22 und/oder Rührsystem 23 bei entsprechenden Ventilstellungen der Feldspritze zu verbinden ist.

Die Feldspritze weist weiterhin den Einspülbehälter 24 auf. An dem Einspülbehälter 24 ist in dessen oberen Bereich eine vorzugsweise als Frischwasserzuführleitung ausgebildete Zuführleitung 25 zur Zuführung von Frischwasser angeordnet ist. Diese Zuführleitung 25 ist über die Zwischenleitung 26 an das Umschaltventil 14 angeschlossen. Hierüber ist die Zuführleitung 25 an die Druckleitung 13 der Flüssigkeitspumpe angeschlossen. Durch die entsprechende Einstellung des Umschaltventils 11 saugt dann bei dem Einspülvorgang die Flüssigkeitspumpe 2 entweder Frischwasser über die Leitung 27 aus dem Frischwasserbehälter 12 aus dem Flüssigkeitstank 1 oder aus einer anderen geeigneten Flüssigkeitsquelle, die Flüssigkeit zum Einspülen der auszubringenden Wirkstoffe, die dem Einspülbehälter 24 zugeführt wird, an. Der in den Einspülbehälter 24 ausmündende Bereich der Zuführleitung ist an die ringförmig ausgebildete Spülleitung 28 angeschlossen. In der Spülleitung 28 sind Einspüldüsen 29 mit jeweils einer schlitzförmigen Austrittsöffnung 30 angeordnet. Die weitere Ausgestaltung und Anordnung der Einspüldüsen 29 wird weiter unten beschrieben.

An den unteren Bereich des Einspülbehälters 24 ist eine in dem Flüssigkeitstank 1 einmündende Saugleitung 31 angeschlossen. Dieser Saugleitung 31 ist ein motorisch zu betätigendes Ventilelement 32 zugeordnet. Über dieses Ventil 32 oder eine andere Abzweigeinrichtung ist die Saugleitung 31 mit dem Umschaltventil 11 über die Verbindungsleitung 33 verbunden. Hierdurch kann durch eine entsprechende Einstellung des Umschaltventils 11 die Verbindungsleitung 33 mit der zu der Pumpe 2 führenden Saugleitung 10 verbunden werden. Somit kann über dieses Leitungssystem Flüssigkeit aus dem Einspülbehälter 24 abgesaugt werden.

Die Einspüldüsen 29 sind beabstandet zueinander an der ringförmig im oberen Bereich 34 unterhalb des Kragens 35 der Einfüllöffnung 36 des Einspülbehälters 24 an der dort angeordneten Spülleitung 28 angeordnet. Mittels den Einspüldüsen 29 des Einspülbehälters 24 der landwirtschaftlichen Feldspritze wird Frischwasser zum Verdünnen von auszubringenden Wirkstoffe Mitteln in den Einspülbehälter 24 eingeleitet. In der Spülleitung 28 sind mehrere zueinander beabstandete Einspüldüsen 29 angeordnet. Diese Einspüldüsen 29 weisen eine zumindest teilweise nach unten weisende Austrittsöffnung 37 auf. Die in den Einspüldüsen 29 jeweils angebrachte Austrittsöffnung 37 ist schlitzartig ausgebildet. Der schlitzförmige Verlauf der jeweiligen Austrittsöffnung 37 der Einspüldüsen 29 ist zumindest anähernd parallel zur dem benachbarten Innenwandbereich 38 des Einspülbehälters 24 ausgerichtet. Die Zuführung des Frischwassers erfolgt durch eine Abzweigung 39 in der Unterseite 40 der Spülleitung 28 mit einer sich daran anschließenden Abzweigleitung 41 von oben zu der Einspüldüse 29. Im Bereich des schlitzförmigen Verlaufes der Austrittsöffnungen 37 wird der Verlauf der Abzweigleitung 41 um zumindest annähernd 90° in Richtung der gegenüberliegenden Wand 42 des Schlitzes 43 der Austrittsöffnung 37 umgelenkt und die Abzweigleitung 41 mündet über die Mündung 44 der Austrittsöffnung 37 in den Einspülbehälter 24 entsprechend aus. Die Abzweigung 39 ist Bestandteil eines in die ringförmige Spülleitung 28 integrierten Leitungsabschnittes der Spülleitung 28 mit Anschlusselementen 45 an Teilbereichen 46 der ringförmigen Spülleitung 28. Die schlitzförmige Austrittsöffnung 37 für die Einbringung des Frischwassers in den Einspülbehälter 24 ist schräg nach unten und schräg, zumindest annähernd parallel zu einer an den Innenwänden 38 der Behälterwänden des Einspülbehälters 24 angelegten Geraden oder Tangenten in den Einspülbehälter 24 hinein schräg nach unten gerichtet.

Schließlich setzt sich die Abzweigleitung 41 sich über die Mündungsöffnung 44 in Richtung der Unterseite des Gehäuses der Einspüldüse 29 fort und ist in ihren Endbereich 47 durch einen Verschlussstopfen 48 verschlossen.

Der Einspülvorgang von den auszubringenden Wirkstoffen, wie Pflanzenbehandlungsmittel und oder Düngemittel erfolgt folgendermaßen:
Zunächst wird die Befüllleitung 25 mit Frischwasser versorgt, so dass über die Zuführleitung 25 Frischwasser den als Mündungsöffnungen 44 ausgebildeten Austrittsöffnungen 37 der Einspüldüsen 29 zugeleitet wird. Hierdurch füllt sich der Einspülbehälter 24 zunächst mit Frischwasser.

Wenn sich genügend Flüssigkeit in dem Einspülbehälter 24 befindet, werden über die Einfüllöffnung 36 des Einspülbehälters 24 die auszubringenden Wirkstoffmittel, wie Pflanzenbehandlungsmittel und Düngemittel eingefüllt. In der Flüssigkeit lösen sich diese Wirkstoffe auf, und werden so, wie landläufig bezeichnet, in die Flüssigkeit eingespült und gelangen über die Saugleitung 31 in den Spritzmitteltank 1, so dass die auszubringende Spritzbrühe entsteht.

Das gute und wirksame Einspülen und Einmischen der auszubringenden Wirkstoffe, wie Pflanzenschutzmittel in die Trägerflüssigkeit, in der Regel Frischwasser, wird im Wesentlichen dadurch erreicht:
Die Austrittsöffnungen 37 für die Einbringung des Frischwassers in den Einspülbehälter 24 schräg nach unten leicht gegen die Innenwand 38 des Einspülbehälters 24 gerichtet. Durch die schlitzartige Ausgestaltung der Austrittsöffnungen 37 der Einspüldüsen 29 entsteht ein fächerförmiger Wasserfächer. Durch die vorbeschriebene Ausrichtung des aus den Mündungsöffnungen 44 der Einspüldüsen 24 austretenden Frischwassers, auch als Trägerflüssigkeit bezeichnet, wird eine strudelartige Bewegung der sich im Einspülbehälter 24 befindenden Flüssigkeit erzeugt. Hierdurch ergibt sich ein gutes Auflösen und Einmischen der auszubringenden Wirkstoffmittel in die Trägerflüssigkeit im Einspülbehälter 24.

Diese auflösende sowie ein- und vermischende Wirkung von Wirkstoffmitteln mit der Trägerflüssigkeit wird also dadurch erreicht, dass die Austrittsöffnungen bzw. aus Mündungen der Einspüldüsen 29 so in den Einspülbehälter 24 ausgerichtet ist, dass durch das in den Einspülbehälter 24 einströmende Frischwasser eine rotierende und/oder strudelartige Bewegung der sich im Einspülbehälter 24 befindliche Flüssigkeit erzeugt wird.

Alle Ausmündungen der Einspüldüsen sind zumindest annähernd in die gleiche Richtung ausgerichtet. Hierdurch wird in ungehinderter Weise ein wirksamer Strudel für die sich im Einspülbehälter 24 befindliche Flüssigkeit erzeugt.

## Patentansprüche

1. Einspülbehälter (24) einer landwirtschaftlichen Feldspritze zum dosierten Ausbringen von mit Frischwasser zu einer Spritzbrühe verdünnten Pflanzenbehandlungsmitteln und/oder Düngemitteln mit einem Spritzmitteltank (1), mit einer Einfüllöffnung (36) einer ringförmig im oberen Bereich unterhalb der Einfüllöffnung (36) des Einspülbehälters (24) angeordneten Spülleitung (28), einer mit der Spülleitung (28) verbundenen Zuführleitung (25) mit einer Frischwasserzuführeinrichtung zur Zuführung von Frischwasser, wobei mehrere zueinander beabstandete zumindest teilweise nach unten weisende Austrittsöffnungen (37) aufweisende Einspüldüsen (29) an der Spülleitung (28)angeordnet sind und die jeweilige Zuleitung (41) der jeweiligen Einspüldüse (29) mit der Spülleitung (28) verbunden ist, wobei die Leitung zur Zuführung des Frischwasser durch eine Abzweigung (41) in der Unterseite (40) der Spülleitung (28) mit einer sich daran anschließenden Abzweigleitung (41) von oben der Einspüldüse (29) zugeführt **dadurch gekennzeichnet, dass** die Austrittsöffnungen (37) schlitzartig ausgebildet sind und der schlitzförmige Verlauf der Austrittsöffnungen (37) der Einspüldüsen (29) zumindest anähernd parallel zu einem benachbarten Innenwandbereich (38) des Einspülbehälters (24) ausgerichtet ist, die Leitung zur Zuführung des Frischwassers im Bereich des schlitzförmigen Verlaufes der Austrittsöffnungen (37) um zumindest annähernd 90° in Richtung der gegenüberliegenden Wand (42) des Schlitzes der Austrittsöffnung (37) umgelenkt wird und über eine schlitzförmige Mündungsöffnung (44) ausmündet.

2. Einspülbehälter nach Anspruch 1, **dadurch gekennzeichnet, dass** die Abzweigung (41) Bestandteil eines in die ringförmige Spülleitung (28) integrierten Leitungsabschnittes der Spülleitung mit Anschlusselementen (45) an Teilbereichen (46) der ringförmigen Spülleitung (28) ist.

3. Einspülbehälter nach Anspruch 1, **dadurch gekennzeichnet, dass** die Abzweigleitung (41) sich über die Mündungsöffnung (44) in Richtung der Unterseite (40) des Gehäuses der Einspüldüse (29) fortsetzt und in Endbereich (47) durch einen Verschlussstopfen (48) verschlossen ist.

4. Einspülbehälter nach zumindest einem der vorstehenden Ansprüche, **dadurch gekennzeichnet, dass** die schlitzförmige Austrittsöffnung (37) für die Einbringung des Frischwassers in den Einspülbehälter (24) schräg nach unten und schräg zumindest annähernd parallel zu einer an den Behälter (24) angelegten Geraden oder Tangenten in den Einspülbehälter (24) hinein schräg nach unten gerichtet ist.

## Claims

1. Induction container (24) of an agricultural field sprayer for the metered dispensing of fertilizers and/or crop treatment compositions diluted with fresh water to form a spray liquor, having a spray tank (1), having a filling opening (36) of a flushing line (28) arranged in an annular manner in the upper region beneath the filling opening (36) of the induction container (24), a feed line (25), connected to the flushing line (28), with a freshwater feed device for feeding fresh water, wherein a plurality of mutually spaced-apart induction nozzles (29) that have at least partially downwardly directed outlet openings (37) are arranged on the flushing line (28) and the respective feed line (41) for the respective induction nozzle (29) is connected to the flushing line (28), wherein the line for feeding the fresh water feeds the induction nozzle (29) from above through a branch (41) in the underside (40) of the flushing line (28) with an adjoining branch line (41), **characterized in that** the outlet openings (37) are configured in a slot-like manner and the slot-like profile of the outlet openings (37) of the induction nozzles (29) is oriented at least approximately parallel to an adjacent inner-wall region (38) of the induction container (24), the line for feeding the fresh water is deflected in the region of the slot-like profile of the outlet openings (37) through approximately 90° in the direction of the opposite wall (42) of the slot of the outlet opening (37) and leads out via a slot-like mouth opening (44).

2. Induction container according to Claim 1, **characterized in that** the branch (41) is a constituent part of a line portion, integrated in the annular flushing line (28), of the flushing line with connection elements (45) at subregions (46) of the annular flushing line (28).

3. Induction container according to Claim 1, **characterized in that** the branch line (41) continues via the mouth opening (44) in the direction of the underside (40) of the housing of the induction nozzle (29) and is closed in an end region (47) by a plug (48).

4. Induction container according to at least one of the preceding claims, **characterized in that** the slot-like outlet opening (37), for introducing the fresh water into the induction container (24), is directed obliquely downwardly into the induction container (24) obliquely downwardly and obliquely at least approximately parallel to a straight line or tangent applied to the container (24) .

## Revendications

1. Récipient d'injection (24) d'un pulvérisateur à cultures agricole destiné à l'épandage dosé de produits de traitement de plantes et/ou de substances fertilisantes dilués avec de l'eau fraîche en bouillie de pulvérisation, comprenant un réservoir de produit de pulvérisation (1), une ouverture de remplissage (36) d'une conduite de rinçage (28) disposée en forme d'anneau dans la zone supérieure au-dessous de l'ouverture de remplissage (36) du récipient d'injection (24), une conduite d'alimentation (25) reliée à la conduite de rinçage (28) et dotée d'un dispositif d'alimentation en eau fraîche pour l'alimentation en eau fraîche, dans lequel plusieurs buses d'injection (29), espacées les unes des autres et présentant des ouvertures de sortie (37) orientées au moins en partie vers le bas, sont disposées sur la conduite de rinçage (28), et la conduite d'amenée (41) respective de la buse d'injection respective (29) est reliée à la conduite de rinçage (28), dans lequel la conduite pour alimenter l'eau fraîche est amenée à la buse d'injection (29) par le haut, par un embranchement (41) dans la face inférieure (40) de la conduite de rinçage (28) avec une conduite d'embranchement (41) prolongeant celui-ci, **caractérisé en ce que** les ouvertures de sortie (37) sont réalisées en forme de fente, et le trajet en forme de fente des ouvertures de sortie (37) des buses d'injection (29) est orienté de manière au moins approximativement parallèle à une zone de paroi intérieure voisine (38) du récipient d'injection (24), la conduite d'amenée de l'eau fraîche étant renvoyée au niveau du trajet en forme de fente des ouvertures de sortie (37) d'au moins approximativement 90° en direction de la paroi opposée (42) de la fente de l'ouverture de sortie (37), et débouche par une embouchure en forme de fente (44).

2. Récipient d'injection selon la revendication 1, **caractérisé en ce que** l'embranchement (41) fait partie d'un tronçon de conduite de la conduite de rinçage, intégré dans la conduite de rinçage annulaire (28), doté d'éléments de raccordement (45) dans des zones partielles (46) de la conduite de rinçage annulaire (28) .

3. Récipient d'injection selon la revendication 1, **caractérisé en ce que** la conduite d'embranchement (41) continue en passant par l'embouchure (44) en direction de la face inférieure (40) du boîtier de la buse d'injection (29) et est fermée dans la zone d'extrémité (47) par un bouchon de fermeture (48).

4. Récipient d'injection selon au moins l'une des revendications précédentes, **caractérisé en ce que** pour l'introduction de l'eau fraîche dans le récipient d'injection (24) en biais vers le bas, l'ouverture de sortie en forme de fente (37) est orientée en biais vers le bas et en biais de manière au moins approximativement parallèle à une droite ou une tangente appliquée au récipient (24) vers l'intérieur du récipient d'injection (24).
